# EUROPÄISCHE PATENTSCHRIFT

(11) **EP 1 595 446 B1**
(45) Veröffentlichungstag und Bekanntmachung des Hinweises auf die Patenterteilung: **26.07.2006**
(21) Anmeldenummer: 04011391.2
(22) Anmeldetag: 13.05.2004
(51) Int. Cl.: A01K 63/04

(54) **Pumpeneinrichtung zur Förderung von Wasser in Aquariumgefässen**
Pumping device for feeding water into aquarium tanks
Installation de pompage pour alimenter d'eau des réservoirs aquarium

(43) Veröffentlichungstag der Anmeldung: 16.11.2005
(73) Patentinhaber: Juwel Aquarium GmbH & Co. KG, 27356 Rotenburg/Wümme (DE)
(72) Erfinder: Marquardt, Dieter, 27356 Rotenburg/Wümme (DE)
(74) Vertreter: Niedmers, Ole

(56) Entgegenhaltungen:
- EP-A- 0 411 559
- EP-A- 0 506 587
- US-A- 4 072 612
- US-A- 5 318 701

## Beschreibung

Die Erfindung betrifft eine Pumpeneinrichtung zur Förderung von Wasser durch eine wenigstens ein Filterelement umfassende Filtereinrichtung eines Aquariumgefäßes, wobei wenigstens ein Filterelement zur Reinigung des Wassers zwischen einem Wassereinlaß zum Eintritt von Rohwasser und einem Pumpenauslaß zum Austritt von Reinwasser angeordnet ist, und wobei dem Pumpenauslaß eine Luftzufuhreinrichtung nachgeschaltet ist, sowie eine Pumpeneinrichtung zur Förderung von Wasser in Aquariumgefäßen, umfassend wenigstens einen Pumpeneinlaß zum Einlaß des Wassers und einen Pumpenauslaß zum Auslaß des geförderten Wassers, wobei dem Pumpeneinlaß eine Luftzufuhreinrichtung nachgeschaltet ist.

Eine Pumpeneinrichtung zur Förderung von Wasser dieser Art ist bekannt (US-A-5 318 701). Bei der bekannten Einrichtung ist ein Pumpenauslaß vorhanden, der über seine gesamte Länge einen einheitlichen, rohrförmigen Querschnitt aufweist, wobei das Rohr pumpenseitig unmittelbar mit seinem gesamten Querschnitt in die eigentliche Pumpenkammer mündet, in dem ein im Pumpenimpeller über eine Achse mittels eines Elektromotors angetrieben wird. In den rohrförmigen Auslaß der Einrichtung mündet die Öffnung eines Stutzens, wobei an den Stutzen ein flexibler Schlauch angebracht werden kann, über den von außen Luft in den rohrförmigen Auslaß gefördert werden kann. Die Förderung von Luft in den Stutzen kann durch eine Pumpe oder durch einen sonstigen Luftvorrat erfolgen.

Eine Pumpeneinrichtung, die in eine Filtereinrichtung für Aquariumgefäße integriert ist, ist bekannt (EP-B-0 498 959). Die Pumpeneinrichtung wird dort im Zusammenhang mit der dortigen Filtereinrichtung betrieben, um einen hohen Reinheitsgrad des Aquariumwassers fortlaufend sicherzustellen.

Die Pumpeneinrichtung der voraufgeführten, speziellen Art, aber auch Pumpeneinrichtungen, die allgemein in Aquariumgefäßen verwendet werden, um eine fortlaufende Bewegung des Aquariumwassers zu erreichen, sind im Hinblick auf ihren Aufbau und ihre Funktion der Fachwelt allgemein bekannt, so daß ein weiteres Eingehen darauf hier nicht erforderlich ist.

Je nach Besatz des Aquariumgefäßes mit Fischen, Wasserpflanzen und sonstigen im Aquariumwasser lebenden Organismen ist neben der Bewegung des Wassers und dessen geeigneter Temperierung auch ein geeigneter, von der Art des Besatzes des Aquariumgefäßes abhängiger Sauerstoffgehalt des Wassers aufrechtzuerhalten. Der Eintrag von Sauerstoff, mit Sauerstoff ist hier die Umgebungsluft gemeint, die neben Sauerstoff als Hauptkomponente sowie Stickstoff und andere Gase beinhaltet, erfolgt bisher i.d.R. mittels geeigneter Luftzufuhreinrichtungen, die pumpenartig ausgebildet sind. Mittels eines Elektromotors oder eines mit der Netzfrequenz eines elektrischen Spannungsnetzes schwingenden Ankers wird eine Membran betätigt (Membranpumpe), die aus der Aquariumumgebung angesaugte Luft in das Wasser des Aquariumgefäßes fördert. Derartige separate Pumpeneinrichtungen können außerhalb oder innerhalb des Aquariumgefäßes, sogar im Wasser des Aquariumgefäßes selbst, angeordnet sein.

Diese hier vereinfacht mit Luftpumpeneinrichtung bezeichneten Pumpen haben sehr viele Nachteile, denn diese entwickeln einen sehr hohen Lärmpegel, der konträr zu dem in der Aquaristik angestrebten, geringen Lautstärke steht, und sie sind zudem als gesondert anzutreibende Einrichtungen energieaufnahmeintensiv sowie gesondert zu warten und stellen auch ein Gefahrenpotential dar, da sie regelmäßig nicht im Wasser des Aquariumgefäßes selbst angeordnet sind und auch somit, anders als die im Aquariumgefäß verwendeten, gattungsgemäßen Pumpeneinrichtungen nicht selbstschmierend mit dem Wasser des Aquariumgefäßes im Hinblick auf das Lager der Pumpen sind. Zudem gestaltet sich bei den bekannten Luftpumpeneinrichtungen die Dosierung der in das Wasser des Aquariumgefäßes zu leitende Luft als schwieriges, regelungstechnisch nur aufwendig zu lösendes Problem, da auch bei der Zufuhr von Sauerstoff in das Wasser des Aquariumgefäßes sichergestellt werden muß, daß die Belüftung des Wassers mit Sauerstoff so behutsam und so dosiert erfolgt, daß das im Wasser gelöste C0₂ nicht ausgespült wird, was für den Besatz des Aquariumgefäßes mit Wasserpflanzen von großem Nachteil sein würde, denn bei zu hohem Sauerstoffanteil und zu geringem Anteil an im Wasser gelösten C0₂ würden die Pflanzen absterben. Zudem muß der Sauerstoffanteil im Wasser in Abhängigkeit des Besatzes mit Lebewesen wie den besagten Pflanzen, den Fischen und sonstigen Lebewesen in einem vom jeweiligen Besatz abhängigen Gleichgewicht stehen, so daß die Fördermenge der für die Wasserbewegung verantwortliche Pumpeinrichtung und die Fördermenge der für das Einbringen von Sauerstoff in das Wasser nötigen Lufteintrageinrichtung in einem bestimmten, aufeinander abgestimmten Verhältnis stehen müssen. Diese regelungstechnische Aufgabe ist mit den bisherigen, jeweils separat vorzusehenden Pumpeneinrichtungen zum einen für das Wasser und zum anderen für den Sauerstoff nur unzureichend möglich und insbesondere auch für Aquariumgefäße mit wertvollem Pflanzen- und Fischbesatz völlig unzureichend.

Es ist somit Aufgabe der vorliegenden Erfindung, Pumpeneinrichtungen der eingangs genannten Art zu schaffen, mit denen eine in Abhängigkeit der Förderleistung der Wasserpumpe abgestimmte Einbringung von Sauerstoff in das Aquariumwasser möglich ist, die keinerlei zusätzlichen Geräuschpegel erzeugt, die darüber hinaus keinen zusätzlichen Wartungs- und Reparaturaufwand erfordert und kein zusätzliches Gefahrenpotential darstellt, die einfach und kostengünstig herstellbar und bereitstellbar ist und zudem in Aquariumgefäßen aller nur denkbarer Wasservolumina Einsatz finden kann.

Gelöst wird die Aufgabe gem. der Erfindung dadurch, daß die Luftzufuhreinrichtung in eine Querschnittsverengung des Pumpenauslasses mündet.

Die erfindungsgemäße Pumpeneinrichtung kann sowohl bei Pumpeneinrichtungen verwendet werden, die in Filtereinrichtungen gem. der EP-B-0 498 959 Einsatz finden, als auch in Pumpeneinrichtungen, die ohne Filtereinrichtungen separat in Aquariumgefäßen eingesetzt werden, um das Aquariumwasser bestimmungsgemäß in Bewegung zu halten und ggf. zusätzlich zu einer gesonderten Filtereinrichtung in Aquariumgefäßen Einsatz finden.

Der Vorteil der erfindungsgemäßen Lösung besteht im wesentlichen darin, daß die Förderung des Aquariumwassers mit der Pumpeneinrichtung, d.h. der Wasserfördermenge pro Zeit, mit der Sauerstoffeintragmenge pro Zeit direkt gekoppelt ist. Zudem ist keine gesonderte, als Pumpe ausgebildete Lufteintrageinrichtung erforderlich, was zur Folge hat, daß aufgrund fehlender mechanischer Teile und elektrischer Antriebe keine zusätzliche Geräuschentwicklung zu verzeichnen ist und keine die Sicherheit des Betreibens von Aquariengefäßen bzw. die Sicherheit der Aquaristik schlechthin beeinträchtigenden Teile und Einrichtungen enthalten.

Durch die lösungsgemäße Maßnahme wird aufgrund der Geschwindigkeitserhöhung des Flusses des Wassers durch die Querschnittsverengung des Pumpenauslasses im Bereich der Querschnittsverengung ein Unterdruck erzeugt, so daß aufgrund des Unterdruckes von außen Luft in den Bereich der Querschnittsverengung eintritt und sich mit dem Wasser, das von der Pumpeneinrichtung gefördert wird, vermischt. Aufgrund dieser Mischtechnik zwischen dem Wasser und der Umgebungsluft infolge des Unterdrucks wird der Sauerstoff in sehr kleinen perl- bzw. bläschenförmigen Einschlüssen im Wasser "gelöst", was in bezug auf die angestrebte gute Verteilung der perl- bzw. bläschenförmig ausgebildeten Lufteinschlüsse im Wasser im Hinblick auf den Besatz des Aquariumgefäßes mit tierischen und pflanzlichen Lebewesen von außerordentlichem Vorteil ist. Ein auf alle Fälle zu verhinderndes Auswaschen von C0₂ bei der Bewegung des Wassers im Zusammenwirken mit dem darin erfindungsgemäß "gelösten" Sauerstoff wird bei der erfindungsgemäßen Lösung vermieden.

Vorteilhafterweise besteht die Luftzufuhreinrichtung aus einem rohrförmigen Element, das vorzugsweise derart im Zusammenwirken mit dem im Querschnitt verengten Pumpenauslaß dazu führt, daß die Luftzufuhreinrichtung nach Art eines Schnorchels aus der Wasseroberfläche des Aquariumgefäßes hinaussteht, während der Pumpenauslaß, ggf. einschl. der gesamten Pumpeneinrichtung, unterhalb der Wasseroberfläche, d.h. im Wasser, des Aquariumgefäßes angeordnet werden kann. Somit kommt das mit Sauerstoff angereicherte, geförderte Wasser mit der Umgebungsluft nicht in Berührung, und es kann sich keine, auf alle Fälle zu vermeidende intensive Oberflächenströmung des Wassers des Aquariumgefäßes ausbilden. Zudem wird durch diese Maßnahme aufgrund der quasi Kapselung der Pumpeneinrichtung einschl. des querschnittsverengten Pumpenauslasses im Wasser des Aquariumgefäßes eine einfache Geräuschpegeldämpfung der gesamten Pumpeneinrichtung erreicht.

Bei einer weiteren vorteilhaften Ausgestaltung der Pumpeneinrichtung ist die am vom Pumpenauslaß abgewandten Ende ausgebildete Öffnung der Luftzufuhreinrichtung mit einer Verschlußeinrichtung versehen, mittels der auf einfache Weise die Luftzufuhr zum querschnittsverengten Pumpenauslaß eingestellt werden kann, und zwar im Hinblick auf die gewünschte Volumenmenge an Sauerstoff pro Zeit in Relation zu der von der Pumpeneinrichtung geförderten Wassermenge pro Zeit. Es kann also in Abhängigkeit des Besatzes des Aquariumgefäßes an pflanzlichen und tierischen Lebewesen sowie in Abhängigkeit des Volumens des Aquariumgefäßes auf einfache Weise eine Einstellung der Sauerstoffzufuhr in das Wasser erfolgen.

Dabei ist vorteilhafterweise die Öffnung der Verschlußeinrichtung vom Schließzustand bis zur vollständigen Öffnung verstellbar ausgebildet, so daß dem Benutzer des Aquariumgefäßes eine Möglichkeit an die Hand gegeben wird, die besagte Menge an Sauerstoff pro Zeit in Abhängigkeit der geförderten Wassermenge pro Zeit selbständig zu variieren.

Die vorangehend aufgeführte Verschlußeinrichtung kann aber auch zusätzlich vorteilhafterweise als Dämpfungseinrichtung fungieren und entsprechend ausgebildet sein, und zwar als Dämpfungseinrichtung zur Dämpfung des Geräuschpegels, der beim Einsaugen der Luft in den querschnittsverengenden Pumpenauslaß entsteht und sich perl- bzw. bläschenförmig eingeschlossen mit dem durch den Pumpenauslaß geförderten Wasser verbindet bzw. "löst".

Der Pumpenauslaß kann vorzugsweise mit einem querschnittsverringernden, gesonderten Rohrelement versehen sein, in das die Luftzufuhreinrichtung mündet, wobei dieses querschnittsverringernde Rohrelement faktisch nur auf den regelmäßig rohr- bzw. flanschförmig ausgebildeten Pumpenauslaß aufgesteckt zu werden braucht. Mittels dieser Ausgestaltung ist auch eine Anpassung an die Geometrie des Aquariumgefäßes im Hinblick auf die Anordnung der Pumpeneinrichtung im Aquariumgefäß selbst möglich, zumal regelmäßig angestrebt wird, die Pumpeneinrichtung in einer vom äußeren sichtbaren Bereich des Aquariumgefäßes möglichst abgesetzt angeordneten inneren Ecke der regelmäßig quaderförmig ausgebildeten Aquariumgefäße anzuordnen. So ist es möglich, den gemeinsamen Luft- und Wassereintrag in das Aquariumgefäß, abgesetzt von der eigentlichen Pumpeneinrichtung bzw. dem Filterelement, in das die Pumpeneinrichtung integriert sein kann, anzuordnen.

Aufgrund der geometrischen aber auch optischen Verhältnisse kann es im Zusammenhang mit dem Einsatz der Pumpeneinrichtung im Aquariumgefäß sinnvoll sein, die Pumpeneinrichtung bspw. in einem vom Aquariumäußeren aus nicht sichtbaren Eckbereich anzuordnen, hingegen den Eintrag von Luft an einem abgesetzt davon anderen Ort im Aquariumgefäß erfolgen zu lassen. Um dieses vorteilhafterweise und einfach bewerkstelligen zu können, ist vorzugsweise zwischen dem Pumpenauslaß und dem querschnittsverringernden Rohrelement ein rohrförmiges Verlängerungselement vorsehbar, wobei dieses Verlängerungselement ggf. auch einen teleskopförmigen Aufbau haben kann, so daß dieses vom Anwender bzw. Benutzer des Aquariumgefäßes an dem gewünschten Eintragort des Sauerstoffs in das querschnittsverringernde Rohrelement auf gewünschte Weise positioniert bzw. verschoben werden kann.

In Abhängigkeit der Größe der Pumpe, ihrer Positionierung am Aquariumgefäß bzw. im Aquariumgefäß sowie des Pegelstandes des Wassers im Aquariumgefäß und ggf. auch in Abhängigkeit der Luftzufuhreinrichtung bspw. bei Ausbildung in Form eines rohrförmigen Elementes, kann es geboten sein, die Luftzufuhreinrichtung im Hinblick auf deren Ansaugöffnung für die Luft verstellbar im Hinblick auf den Wasserpegel im Aquariumgefäß verstellbar auszubilden, insbesondere auch um fortwährend sicherzustellen, daß sich soweit wie möglich keine Oberflächenströmung des mit der Pumpeneinrichtung geförderten Wassers einschließlich des perl- bzw. bläschenförmigen Lufteintrags ausbilden kann.

Es ist deshalb vorteilhaft, das Verlängerungselement für diese Zwecke wenigstens zweiteilig auszubilden, wobei das eine Teil gegenüber dem anderen Teil verdrehbar ausgebildet ist, und wobei das voraufgeführte Ziel am einfachsten dadurch erreichbar ist, daß wenigstens eines der Teile gewinkelt ausgebildet ist, so daß bei Drehung des gewinkelten Teils relativ zum Pumpenauslaß und relativ zum rohrförmigen Element, in das die Luftzufuhreinrichtung mündet, eine einfache Einstellbarkeit der Tiefe des Wasserauslasses des rohrförmigen Elements relativ zur Wasseroberfläche im Aquariumgefäß erreichbar ist, wobei entsprechend der Tiefenpositionierung des rohrförmigen Elementes auch die Luftzufuhreinrichtung entsprechend tief in das Wasser des Aquariumgefäßes hineinsteht, so daß nur noch der Öffnungsbereich der Luftzufuhreinrichtung aus dem Wasser des Aquariumgefäßes ragt.

Alle Elemente der Pumpeneinrichtung, die dem Pumpenauslaß nachfolgen, können aus beliebigen geeigneten Werkstoffen bestehen, bspw. aus Metall oder Kunststoff, insbesondere spritzfähigem Kunststoff. Das bezieht sich vorzugsweise auf wenigstens die Luftzufuhreinrichtung, wenigstens das querschnittsverringernde Rohrelement und wenigstens das Verlängerungselement. Als Kunststoffwerkstoff eignet sich in diesem Falle insbesondere Polystyrol.

Die Erfindung wird nachfolgend anhand eines Ausführungsbeispieles unter Bezugnahme auf die schematischen Zeichnungen im einzelnen beschrieben. Darin zeigen:
- Fig. 1: in der Seitenansicht eine Pumpeneinrichtung gemäß der Erfindung, umfassend eine Pumpe mit einem Pumpengehäuse, zwei jeweils gewinkelte Verlängerungelemente und ein rohrförmiges Element, auf das eine rohrförmige Luftzufuhreinrichtung aufgebracht ist bzw. in das rohrförmige Element mündet,
- Fig. 2: das rohrförmige Element, in das die rohrförmige Luftzufuhreinrichtung (hier nicht dargestellt) mündet in gegenüber Fig. 1 vergrößerter Darstellung in der Ansicht auf die Öffnung, in die die rohrförmige Luftzufuhreinrichtung mündet, und
- Fig. 3: in der Seitenansicht gemäß Fig. 1 ein zweiteilig ausgebildetes Verlängerungselement in auseinandergezogener Darstellung.

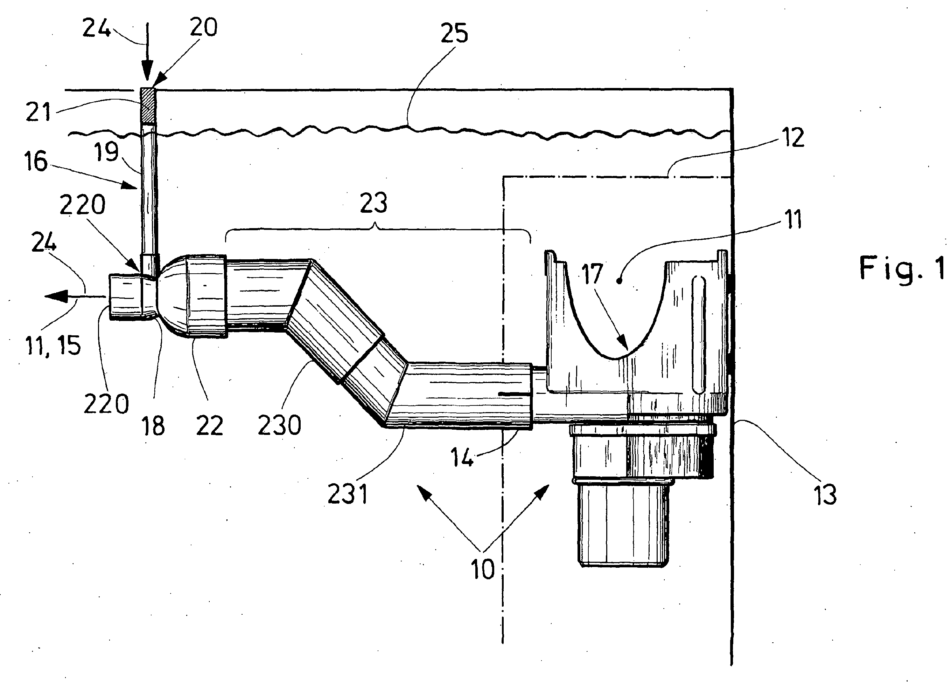

Es wir zunächst auf Fig. 1 Bezug genommen, in der in Form eines Ausschnitts ein Aquariumgefäß 13 dargestellt ist, das mit Wasser 11 gefüllt ist, wobei in einem Eckbereich des Aquariumgefäßes 13 eine Pumpeneinrichtung 10 gemäß der Erfindung dargestellt ist.

Die Pumpeneinrichtung 10 kann in eine Filtereinrichtung 12, hier lediglich strichpunktiert angedeutet, integriert sein, mittels der das Wasser 11, auch Rohwasser genannt, fortwährend gefiltert wird, so daß es die Pumpeneinrichtung 10 am Pumpenauslaß 14 als Reinwasser 15 verläßt. Die Pumpeneinrichtung 10 kann aber auch prinzipiell in einem Aquariumgefäß 13, separiert von einer ggf. vorzusehenden Filtereinrichtung 12, betrieben werden.

Für das Verständnis der erfindungsgemäßen Pumpeneinrichtung 10 ist deshalb auf die Filtereinrichtung 12 im einzelnen hier nicht einzugehen.

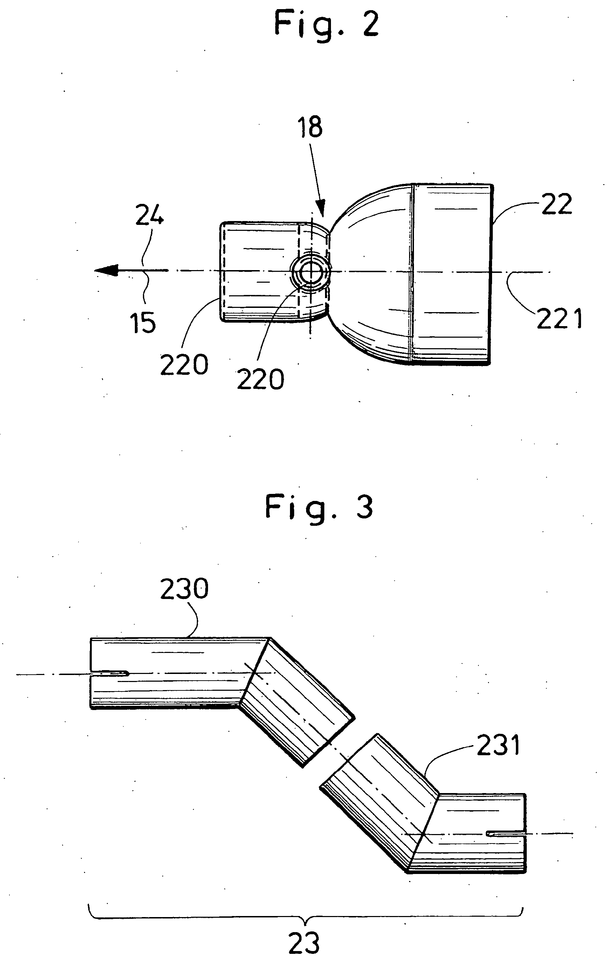

Die Pumpeneinrichtung 10 weist einen konventionellen Aufbau auf, der der Fachwelt auf diesem Gebiete bekannt ist, so daß auf die eigentliche Pumpe hier nicht weiter eingegangen zu werden braucht. Zur eigentlichen Pumpeneinrichtung 10 bzw. Pumpe zur Förderung des Wassers 11 im Aquariumgefäß ist hier nur zu erwähnen, daß die Pumpeneinrichtung 10 wenigstens einen Pumpeneinlaß 17zum Einlaß des Wassers 11 (Rohwasser) und einen Pumpenauslaß 14 zum Auslaß des geförderten Wassers 15 umfaßt. Dem Pumpenauslaß (14) ist ein rohrförmig ausgebildetes Verlängerunselement 23 nachgeschaltet, das aus zwei im wesentlichen gleichen Teilen 230, 231 besteht, die hier jeweils zwei Schenkel aufweisen, die um jeweils 45° zueinander abgewinkelt sind. Die beiden Teile 230, 231 bilden das Verlängerungselement 23 in ihrer Gesamtheit, wobei beide Teile 230, 231 derart ausgebildet sind, daß sie aufeinandersteckbar sind, vgl. die Fig. 1 und 3, wobei Fig. 3 die beiden Teile 230, 231 in auseinandergezogener Darstellung zeigt. Dem Verlängerungselement 23 in Förderrichtung des Reinwassers 15 nachfolgend ist ein Rohrelement 22 vorgesehen, vgl. Fig. 1 und 2, wobei das Rohrelement 22 auf das freie Ende des Teile 230 geeignet aufsteckbar ist.

Das Rohrelement 22 ist derart geformt, daß es eine Querschnittsverengung 18 aufweist. Im Bereich der Querschittsverengung 18 ist eine Öffnung 220 vorgesehen, in die ein hier im wesentlichen vertikal, in bezug auf die Darstellung von Fig. 1, zur Achse 221 des Rohrelementes angeordnetes, rohrförmiges Element 19 mündet und dort geeignet positioniert und befestigt ist.

Das rohrförmige Element 19 fungiert als Luftzufuhreinrichtung 16, worauf im einzelnen noch nachfolgend eingegangen wird. Es sei darauf hingewiesen, daß das rohrförmige Element 19 nicht zwingend in Form eines im wesentlichen formstabilen Rohres ausgebildet zu werden braucht, vielmehr kann dieses auch in Form eines zumindest im Rohrquerschnitt im wesentlichen formstabilen Schlauches ausgebildet sein. Das rohrförmige Element 19 weist eine derartige Länge auf, daß es im Aquariumgefäß 13, geeignet zusammenwirkend mit der Pumpeneinrichtung 10 und in deren positioniertem Zustand, um einen geeignet gewählten Betrag aus der Wasseroberfläche 25 des Wassers 11 im Aquariumgefäß 13 heraussteht, vgl. Fig. 1. An seinem freien Ende weist das rohrförmige Element 19 eine Verschlußeinrichtung 21 auf, die hier als luftdurchlässiger Stopfen, der hier straffiert dargestellt ist, ausgebildet ist. Es ist aber auch möglich, eine Verschlußeinrichtung 21 vorzusehen, die ggf. durch den Benutzer des Aquariumgefäßes 13 selbständig von einem Schließzustand bis zur vollständigen Öffnung verstellbar ist. Mittels dieser Verschlußeinrichtung 21 kann sowohl die Zufuhr von Sauerstoff 24 bzw. Umgebungsluft in das rohrförmige Element 19 hinein dosiert werden, wobei die Verschlußeinrichtung 21 gleichzeitig als Lärmdämpfungselement wirken kann, d.h. im Hinblick auf eine Dämpfung des Lärms bzw. Schalls, der beim Einsaugen des Sauerstoffs 24 in das Rohrelement 22 im Bereich seiner Querschnittsverengung 18 entsteht.

Mittels der gegenseitigen Verdrehbarkeit der beiden Teile 230, 231 des Verlängerungselementes 23 kann bei ansonsten fester Positionierung des eigentlichen Pumpenteils der Pumpeneinrichtung 10 im Aquariumgefäß 13 eine geeignete Einstellung des Teils des rohrförmigen Elementes 19 erreicht werden, der aus der Wasseroberfläche 25 heraussteht. So ist es möglich, mit dem Verlängerungselement 23 eine selbständige Einstellung des entsprechenden Betrages des rohrförmigen Elementes 19, das aus der Wasseroberfläche 25 herausstehen soll, in Abhängigkeit der Geometrie und des konstruktiven Aufbaus des Aquariumgefäßes 13 selbständig einzustellen.

Während des bestimmungsgemäßen Betriebes der Pumpeneinrichtung 10 wird auf an sich bekannte Weise Wasser bzw. Rohwasser 11 in vom Pumpeneinlaß 17 durch die Pumpe zum Pumpenauslaß 14 gefördert und von dort durch das Verlängerungselement 23 auf das Rohrelement 22. Aufgrund der im Rohrelement 22 konstruktiv vorgenommenen Querschnittsverengung 18 erhöht sich die Geschwindigkeit des geförderten Wassers an dieser Stelle entweder als lediglich umgewälztes Rohwasser 11 oder als Reinwasser 15, wenn die Pumpeneinrichtung 10 mit einer Filtereinrichtung 12 zusammenwirkt. Infolge des sich an der Querschnittsverengung 18 aufbauenden Unterdrucks wird Umgebungsluft 24 über die Öffnung 20 des rohrförmigen Elementes 19 eingesogen und nach Durchtritt durch die Öffnung 220 des Rohrelements 22 in das geförderte Volumen aus Wasser 11 bzw. Reinwasser 15 eingesogen. Die Luft verteilt sich an dieser Stelle im Wasser 11 bzw. 15 in Form feiner perl- bzw. bläschenförmiger Form und wird bis zu einem gewissen Anteil sogar im Wasser 11 bzw. 15 gelöst und in das Aquariumgefäß 13 über den Auslaß 222 des Rohrelementes 22 in das Aquariumgefäß 13 als Wasser-Luft-Gemisch gefördert.

### Bezugszeichenliste

- 10: Pumpeneinrichtung
- 11: Wasser/Rohwasser
- 12: Filtereinrichtung
- 13: Aquariumgefäß
- 14: Pumpenauslaß
- 15: Reinwasser
- 16: Luftzufuhreinrichtung
- 17: Pumpeneinlaß
- 18: Querschnittsverengung
- 19: rohrförmiges Element
- 20: Öffnung
- 21: Verschlußeinrichtung
- 22: Rohrelement
- 220: Öffnung
- 221: Achse
- 222: Auslaß
- 23: Verlängerungselement
- 230: Teil-Verlängerungselement
- 231: Teil-Verlängerungselement
- 24: Sauerstoff/Luft
- 25: Wasseroberfläche

## Patentansprüche

1. Pumpeneinrichtung (10) zur Förderung von Wasser (11) in Aquariumgefäßen (13), umfassend wenigstens einen Pumpeneinlaß (17) zum Einlaß des Wassers (11) und einen Pumpenauslaß (14) zum Auslaß des geförderten Wassers (15), wobei dem Pumpeneinlaß (14) eine Luftzufuhreinrichtung (16) nachgeschaltet ist, **dadurch gekennzeichnet, daß** die Luftzufuhreinrichtung (16) in eine Querschnittsverengung (18) des Pumpenauslasses (14) mündet.

2. Pumpeneinrichtung (10) nach Anspruch 1, **dadurch gekennzeichnet, dass** sie eine wenigstens ein Filterelement umfassende Filtereinrichtung (12) eines Aquariumgefäßes (13) aufweist, wobei das wenigstens eine Filterelement zur Reinigung von Wasser (11) zwischen einem Wassereinlaß zum Eintritt von Rohwasser (11) und einem Pumpenauslaß (14) zum Austritt von Reinwasser (15) angeordnet ist.

3. Pumpeneinrichtung nach einem oder beiden der Ansprüche 1 oder 2, **dadurch gekennzeichnet, daß** die Luftzufuhreinrichtung (16) aus einem rohrförmigen Element (19) besteht.

4. Pumpeneinrichtung nach Anspruch 3, **dadurch gekennzeichnet, daß** die am vom Pumpenauslaß (14) abgewandten Ende ausgebildete Öffnung (20) der Luftzufuhreinrichtung (16) mit einer Verschlußeinrichtung (21) versehen ist.

5. Pumpeneinrichtung nach Anspruch 4, **dadurch gekennzeichnet, daß** die Öffnung (20) mit der Verschlußeinrichtung (21) vom Schließzustand bis zur vollständigen Öffnung verstellbar ausgebildet ist.

6. Pumpeneinrichtung nach einem oder beiden der Ansprüche 4 oder 5, **dadurch gekennzeichnet, daß** die Verschlußeinrichtung (21) als Dämpfungseinrichtung ausgebildet ist.

7. Pumpeneinrichtung nach einem oder mehreren der Ansprüche 1 bis 6, **dadurch gekennzeichnet, daß** der Pumpenauslaß (14) mit einem querschnittsverringernden Rohrelement (22) zu versehen ist, in das die Luftzufuhreinrichtung (16) mündet.

8. Pumpeneinrichtung nach Anspruch 7, **dadurch gekennzeichnet, daß** zwischen dem Pumpenauslaß (14) und dem querschnittsverringernden Rohrelement (22) ein rohrförmiges Verlängerungselement (23) angeordnet ist.

9. Pumpeneinrichtung nach Anspruch 8, **dadurch gekennzeichnet, daß** das Verlängerungselement (23) wenigstens zweiteilig ausgebildet ist, wobei das eine Teil (230) gegenüber dem anderen Teil (231) verdrehbar ausgebildet ist.

10. Pumpeneinrichtung nach Anspruch 9, **dadurch gekennzeichnet, daß** wenigstens eines der Teile (230, 231) gewinkelt ausgebildet ist.

11. Pumpeneinrichtung nach einem oder mehreren der Ansprüche 1 bis 10, **dadurch gekennzeichnet, daß** wenigstens die Luftzufuhreinrichtung (16) aus spritzfähigem Kunststoffwerkstoff besteht.

12. Pumpeneinrichtung nach einem oder mehreren der Ansprüche 7 bis 11, **dadurch gekennzeichnet, daß** wenigstens das querschnittsverringernde Rohrelement (22) aus spritzfähigem Kunststoff besteht.

13. Pumpeneinrichtung nach einem oder mehreren der Ansprüche 1 bis 12, **dadurch gekennzeichnet, daß** wenigstens das Verlängerungselement (23) aus spritzfähigem Kunststoffwerkstoff besteht.

14. Pumpeneinrichtung nach einem oder mehreren der Ansprüche 11 bis 13, **dadurch gekennzeichnet, daß** der Kunststoffwerkstoff Polystyrol ist.

## Claims

1. Pump system (10) for conveying water (11) in aquarium tanks (13), comprising at least a pump inlet (17) for introducing the water (11) and a pump outlet (14) for discharging the conveyed water (15), which pump inlet (14) has an air delivery system (16) connected downstream, **characterised in that** the air delivery system (16) opens into a cross-sectional narrowing (18) of the pump outlet (14).

2. Pump system (10) as claimed in claim 1, **characterised in that** a filter system (12) of an aquarium tank (13) has at least one filter element and the at least one filter element is provided as a means of cleaning water (11) and is disposed between a water inlet for introducing untreated water (11) and a pump outlet (14) for discharging clean water (15).

3. Pump system as claimed in one or both of claims 1 or 2, **characterised in that** the air delivery system (16) is a tubular-shaped element (19).

4. Pump system as claimed in claim 3, **characterised in that** the orifice (20) of the air delivery system (16) at the end remote from the pump outlet (14) is provided with a closure device (21).

5. Pump system as claimed in claim 4, **characterised in that** the orifice (20) with the closure device (21) can be adjusted from the closed state to a fully open state.

6. Pump system as claimed in one of both of claims 4 or 5, **characterised in that** the closure device (21) is designed as a damping device.

7. Pump system as claimed in one of more of claims 1 to 6, **characterised in that** the pump outlet (14) is provided with a tubular element (22) for reducing the cross-section into which the air delivery system (16) opens.

8. Pump system as claimed in claim 7, **characterised in that** a tubular-shaped extension element (23) is disposed between the pump outlet (14) and the tubular element (22) reducing the cross-section.

9. Pump system as claimed in claim 8, **characterised in that** the extension element (23) comprises at least two parts, in which case one part (230) is designed to be rotatable relative to the other part (231).

10. Pump system as claimed in claim 9, **characterised in that** at least one of the parts (230, 231) is of an angled design.

11. Pump system as claimed in one or more of claims 1 to 10, **characterised in that** at least the air delivery system (16) is made from injection-mouldable plastic material.

12. Pump system as claimed in one or more of claims 7 to 11, **characterised in that** at least the tubular element (22) reducing the cross-section is made form injection-mouldable plastic.

13. Pump system as claimed in one or more of claims 1 to 12, **characterised in that** at least the extension element (23) is made from injection-mouldable plastic material.

14. Pump system as claimed in one or more of claims 11 to 13, **characterised in that** the plastic material is polystyrene.

## Revendications

1. Système de pompage (10) destiné à acheminer de l'eau (11) dans des aquariums (13), comportant au moins un orifice d'admission de pompe (17) pour l'entrée d'eau (11) et un orifice d'évacuation de pompe (14) pour la sortie d'eau acheminée (15), un système d'amenée d'air (16) étant monté en aval de l'orifice d'admission de pompe (17), **caractérisé en ce que** le système d'amenée d'air (16) débouche dans un rétrécissement de section transversale (18) de l'orifice d'évacuation de pompe (14).

2. Système de pompage (10) selon la revendication 1, **caractérisé en ce qu'**il comprend un système de filtration (12) d'un aquarium (13) comportant au moins un élément de filtration, le au moins un élément de filtration de nettoyage de l'eau (11) étant disposé entre un orifice d'admission d'eau pour l'entrée d'eau brute (11) et un orifice d'évacuation de pompe (14) pour la sortie d'eau claire (15).

3. Système de pompage selon l'une ou deux des revendications 1 ou 2, **caractérisé en ce que** le système d'amenée d'air (16) est constitué d'un élément tubulaire (19).

4. Système de pompage selon la revendication 3, **caractérisé en ce que** l'ouverture (20) du système d'amenée d'air (16), formée sur l'extrémité opposée à l'orifice d'évacuation de pompe (14), est pourvue d'un système de fermeture (21).

5. Système de pompage selon la revendication 4, **caractérisé en ce que** l'ouverture (20) est conçue avec un système de fermeture (21) pouvant être réglé de l'état fermé jusqu'à l'ouverture complète.

6. Système de pompage selon l'une ou deux des revendications 4 et 5, **caractérisé en ce que** le système de fermeture (21) est conçu comme un système d'amortissement.

7. Système de pompage selon l'une ou plusieurs des revendications 1 à 6, **caractérisé en ce que** l'orifice d'évacuation de pompe (14) est à pourvoir d'un élément tubulaire (22) à rétrécissement de section transversale, dans lequel débouche le système d'amenée d'air (16).

8. Système de pompage selon la revendication 7, **caractérisé en ce qu'**un élément de prolongement tubulaire (23) est disposé entre l'orifice d'évacuation de pompe (14) et l'élément tubulaire à rétrécissement de section transversale (22).

9. Système de pompage selon la revendication 8, **caractérisé en ce que** l'élément de prolongement (23) est conçu au moins en deux parties, l'une des parties (230) étant conçue de manière rotative par rapport à l'autre partie (231).

10. Système de pompage selon la revendication 9, **caractérisé en ce qu'**au moins une des parties (230, 231) est conçue de façon coudée.

11. Système de pompage selon l'une quelconque des revendications 1 à 10, **caractérisé en ce qu'**au moins le système d'amenée d'air (16) est constitué d'une matière plastique injectable.

12. Système de pompage selon l'une ou plusieurs des revendications 7 à 11, **caractérisé en ce qu'**au moins l'élément tubulaire à rétrécissement de section transversale (22) est constitué d'une matière plastique injectable.

13. Système de pompage selon l'une ou plusieurs des revendications 1 à 12, **caractérisé en ce qu'**au moins l'élément de prolongement (23) est constitué d'une matière plastique injectable.

14. Système de pompage selon l'une ou plusieurs des revendications 11 à 13, **caractérisé en ce que** la matière plastique est du polystyrène.
